# EUROPÄISCHE PATENTSCHRIFT

(11) **EP 1 424 224 B1**
(45) Veröffentlichungstag und Bekanntmachung des Hinweises auf die Patenterteilung: **06.09.2006**
(21) Anmeldenummer: 02406027.9
(22) Anmeldetag: 26.11.2002
(51) Int. Cl.: B60G 5/02, B60G 3/12, B60G 7/02, B62D 61/00, B60B 11/00, F16C 11/06

(54) **Fahrgestell für ein strassen- und geländegängiges Fahrzeug**
Chassis for a road vehicle and an off-road vehicle
Châssis pour véhicule routier et véhicule tout-terrain

(43) Veröffentlichungstag der Anmeldung: 02.06.2004
(73) Patentinhaber: Kurmann Technik AG, 6017 Ruswil (CH)
(72) Erfinder: Kurmann, Otto, 6017 Ruswil (CH)
(74) Vertreter: Fenner, Werner

(56) Entgegenhaltungen:
- WO-A-92/04196
- DE-A- 3 340 906
- FR-A- 1 473 154
- US-A- 2 453 117
- US-A- 2 576 824
- US-A- 2 823 926
- US-A- 3 773 348
- US-A- 3 807 752
- US-A- 4 049 071
- US-B1- 6 286 857

## Beschreibung

Die Erfindung betrifft ein Fahrgestell für ein strassen- und geländegängiges Fahrzeug, insbesondere ein Anhänger, mit paarweise nebeneinander angeordnete Räder aufweisenden, eine Fahrachse bildenden Pendelachsen, die jeweils um eine zwischen den Rädern in Fahrzeuglängsrichtung verlaufende Achse begrenzt pendelbar an einem Fahrgestellrahmen gelagert sind, dass der Fahrgestellrahmen in Fahrrichtung betrachtet einenends, beidseits jeweils ein nach wenigstens zwei etwa senkrecht zueinanderstehenden Ebenen schwenkbares Pendellager eines endseitig schwenkbar gelagerten und sich in Fahrrichtung erstreckenden sowie anderenends an dem Fahrgestellrahmen abgestützten Achsträger aufweist.
Ein Fahrgestell der eingangs genannten Art ist in der DE 33 40 906 C2 beschrieben und wird im Bereich landwirtschaftlicher Fahrzeuge, insbesondere bei von Traktoren gezogenen Anhängern in der Praxis erfolgreich eingesetzt.
Mit einem solchen Fahrgestell lassen sich die Lasten gegenüber bekannten Anhängern auf eine grössere Abstützfläche verteilen und die erhöhte Fahrsicherheit gestattet ein höheres Gesamtgewicht; Fluren und Felder werden weniger beansprucht.
Die US 3'807'752 A beschreibt einen strassengängigen Anhänger, insbesondere eine tragende Anordnung für einen Anhänger, der mehrere Längsträger und Querträger aufweist. Entlang von jeweils zwei seitlich parallel nebeneinander angeordneten Längsträgern sind an deren Unterseite um senkrechte Achsen schwenkbare Räderpaare befestigt, die zwischen Platten einer Tragkonstruktion in einem Gestell gelagert sind. Etwa in der Längsmitte wird ein Träger von einer kurzen Welle durchsetzt, an deren Enden jeweils ein Rad befestigt ist. Das Ende des Trägers ist durch eine Lagerbüchse ausgebildet, die einen eliptischen Querschnitt aufweist und aus einem elastischen Material besteht. Die elastisch verformbare Lagerbüchse gestattet eine gewisse Verdrehbarkeit des Trägers, der an dem entgegengesetzten Ende an dem Gestell nach oben hin abgestützt und in einem Schlitz einer T-förmigen Endplatte senkrecht geführt ist.

Die US 6'286'857 B1 betrifft eine Aufhängung für ein Fahrgestell eines Anhängers, der in Fahrtrichtung nebeneinander paarweise an einer Welle befestigte Räder mit Doppelbereifung aufweist. Die eine Fahrachse bildenden Räderpaare sind an einem Längsträger gelagert, der einenends in einem sphärischen Lager in zwei senkrecht zueinander stehenden Ebenen schwenkbar und anderenends unter Zwischenlage einer Feder an Längsträgern des Anhängers aufgehängt ist.

Den zunehmend höheren Anforderungen an Leistung und Fahrkomfort sowie den höheren Fahrgeschwindigkeiten und grösseren Lasten sind diese Fahrgestelle jedoch nicht mehr gewachsen.
Es reicht nicht aus, den Reifendruck für ein sanfteres Fahren zu reduzieren und damit den spezifischen Bodendruck zu verringern und auf diese Weise den höheren Anforderungen zu begegnen.

Es ist Aufgabe der Erfindung, ein Fahrgestell nach den Verkehrvorschriften zu schaffen, das ein höheres Gesamtgewicht, einen höheren Fahrkomfort und höhere Sicherheit gewährt sowie einen geringeren Verschleiss an Reifen und Fahrgestell bewirkt.

Erfindungsgemäss wird diese Aufgabe dadurch gelöst, dass die jeweils in einer etwa senkrecht angeordneten Ebene seitlich schwenkbar ausgebildeten Pendellager mit einem in einer mit dem Fahrgestellrahmen verbundenen Kulisse geführten Lenkstock begrenzt schwenkbar verbunden sind.
Dadurch kann der spezifische Bodendruck erheblich reduziert werden, wobei sich dieser eintretende Effekt sowohl auf Fluren und Felder als auch auf die Fahrsicherheit und den Fahrkomfort positiv auswirken.
Die Reifen können mit vorgeschriebenem Druck versehen werden, sodass sich ein normales Verschleissbild einstellt und ein optimaler Bodenkontakt entsteht.

Es erweist sich als vorteilhaft, wenn sich die Pendellager bei Vorwärtsfahrt vorderenends des Fahrgestellrahmens befinden, sodass eine effiziente Lenkverbindung und hohe Stabilität zwischen Zugmaschine und Fahrgestell entsteht.

Vorzugsweise sind die Pendellager jeweils am unteren Ende eines senkrechten Stützträgers des Fahrgestellrahmens befestigt, wodurch eine günstige Anordnung der Achsträger bezüglich der Pendelachsen und Räder erreicht wird.

Dadurch, dass der Fahrgestellrahmen an dem in Fahrrichtung vorderen Ende als tragendes Joch ausgebildet sein kann, ergibt sich eine insgesamt hohe Formstabilität des Fahrgestells, die sich auf das Fahrverhalten und die Tragkraft günstig auswirkt.

Damit ein Kräfteausgleich an dem Fahrgestell entstehen kann, ist es zweckmässig, wenn das am Fahrgestellrahmen jeweils abgestützte Ende des Achsträgers durch ein Abstützorgan gebildet und zumindest annähernd senkrecht beweglich geführt ist.

Zur Einstellung der Achsträger ist es vorteilhaft, wenn die Abstützorgane bezüglich Abstützlänge variierbar sind.

Wenn die Abstützorgane durch Kolben-Zylinder-Einheiten ausgebildet sind, kann ein gewisser Dämpfungseffekt zwischen Fahrgestellrahmen und Achsträger erzielt werden.

Bei einer einfachen Ausführungsform des Pendellagers ist ein mit dem Fahrgestellrahmen verbundener, kugelartig ausgebildeter Gelenkkopf vorgesehen, an dem zwei sich gegenüberliegende, mit dem Achsträger und dem Lenkstock verbundene Gelenkpfannen gelagert sind.

Vorzugsweise sind die Gelenkpfannen an der der Lagerfläche abgekehrten Rückseite federnd abgestützt.

Hierzu können Druckfedern bzw. Tellerfedem in einem an dem Achsträger befestigten, die Gelenkpfanne aufnehmenden Gehäuse angeordnet sein.

Zur optimalen Einstellung des Pendellagers ist es vorteilhaft, wenn das Gehäuse mit den Achsträgern lösbar verbunden ist, beispielsweise durch eine Schraubenverbindung, wodurch der Lagerdruck einstellbar wird.

Für eine stabile Verbindung mit den Pendellagern ist der Lenkstock jeweils im Verbindungsbereich zum Pendellager als Gabel ausgebildet, die mit den Gelenkpfannen schwenkbar verbunden ist, sodass eine räumlich begrenzte Bewegungsfreiheit für die Achsträger entsteht.

Die Bewegungsfreiheit eines Achsträgers in einem Pendellager wird zweckmässig durch die rückwärtige Führung des Achsträgers an dem Fahrgestellrahmen weiter limitiert.

Die erzielbaren Vorteile der Erfindung können dahingehend optimiert werden, dass mit dem Fahrgestellrahmen ein weiterer Fahrgestellrahmen eines zugeschalteten resp. nachgeschalteten Fahrgestells verbunden wird.

Bei Verwendung von aus Kolben-Zylinder-Einheiten gebildeten Abstützorganen an den Fahrgestellen erscheint es sinnvoll, erstere durch eine ein Druckmedium führende Leitung zu verbinden.

Weiterhin ist es günstig, wenn die Achsträger des zugeschalteten resp. nachgeschalteten Fahrgestells an dem vorderen Ende gemeinsam um jeweils eine etwa senkrechte Achse mit den Pendellagern schwenkbar verbunden sind.

Zu diesem Zweck können die Achsträger an dem rückwärtigen Ende an einer etwa quer zur Fahrrichtung angeordneten Verbindungsstange angelenkt sein, sodass eine gemeinsame Schwenkbewegung ausgelöst werden kann.

Selbstverständlich könnten dadurch die Achsträger mit einer Steuervorrichtung bekannter Art zum Lenken ausgebildet werden.

Vorteilhaft sind die durch die Verbindungsstange verbundenen Achsträger in einer an dem Fahrgestellrahmen angeordneten, quer zur Fahrrichtung wirksamen Führungsvorrichtung schwenkbar ausgebildet.

Hierbei ist es zweckmässig, einen Schieber der Führungsvorrichtung durch Stützelemente mit den Achsträgern zu verbinden, sodass eine einfache, den Aforderungen gerecht werdende Auslenkung des zugeschalteten Fahrgestells entstehen kann.

Es erweist sich als vorteilhaft, wenn die Stützelemente mit den Achsträgern gelenkig verbunden sind, sodass Verspannungen mit der Führungsvorrichtung ausbleiben.

Die an dem rückwärtigen Ende eines Achsträgers vorgesehenen Abstützorgane sind zur Beweglichkeit der Achsträger an dem Schieber der Führungsvorrichtung angelenkt.

Anschliessend wird die Erfindung unter Bezugnahme auf die Zeichnung, auf die bezüglich aller in der Beschreibung nicht erwähnten Einzelheiten verwiesen wird, anhand zweier Ausführungsbeispiele erläutert. In der Zeichnung zeigt:
- Fig. 1: eine Seitenansicht des erfindungsgemässen Fahrgestells,
- Fig. 2: eine Draufsicht auf das Fahrgestell gemäss Fig. 1,
- Fig.3: eine auszugsweise Seitenansicht des Fahrgestells im Bereich des (vorderen) Anlenkbereichs der Achsträger,
- Fig. 4: einen Schnitt durch das Pendellager gemäss der Linie IV-IV in Fig. 3 und

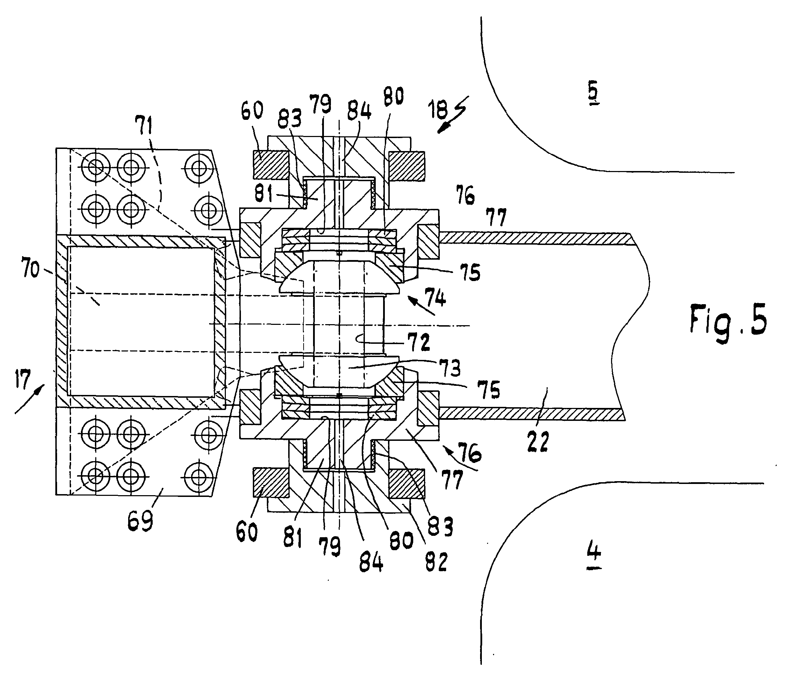

- Fig. 5: einen Schnitt durch das Pendellager gemäss der Linie V-V in Fig. 3.

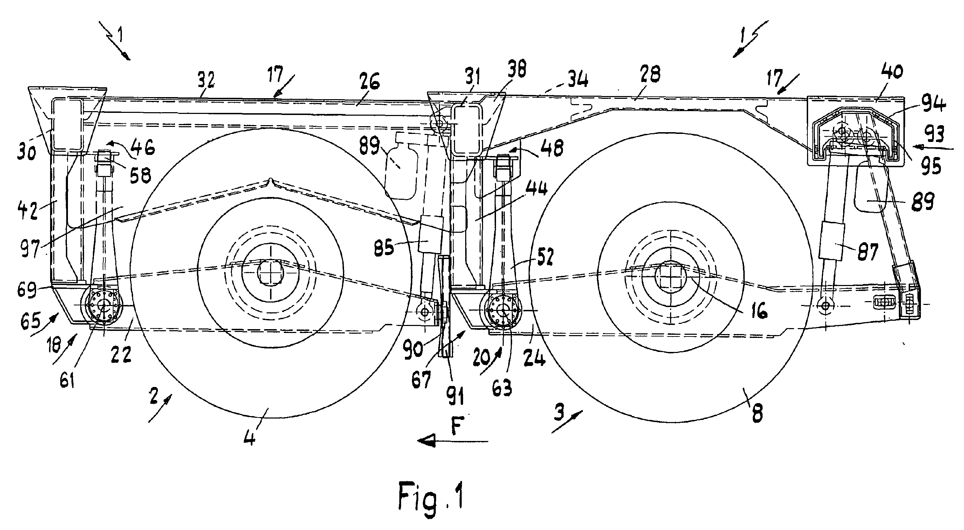

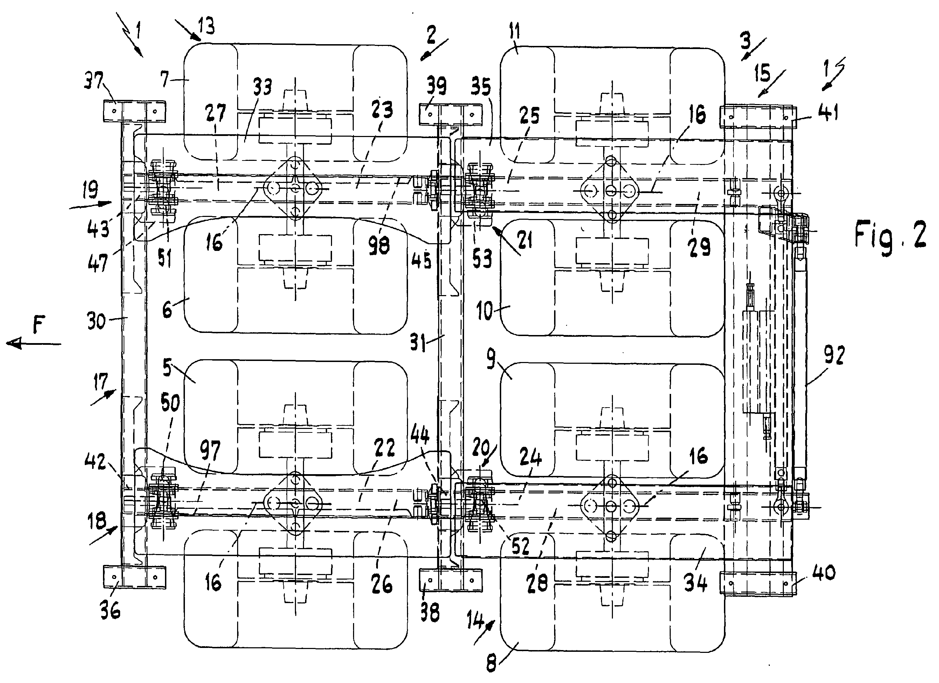

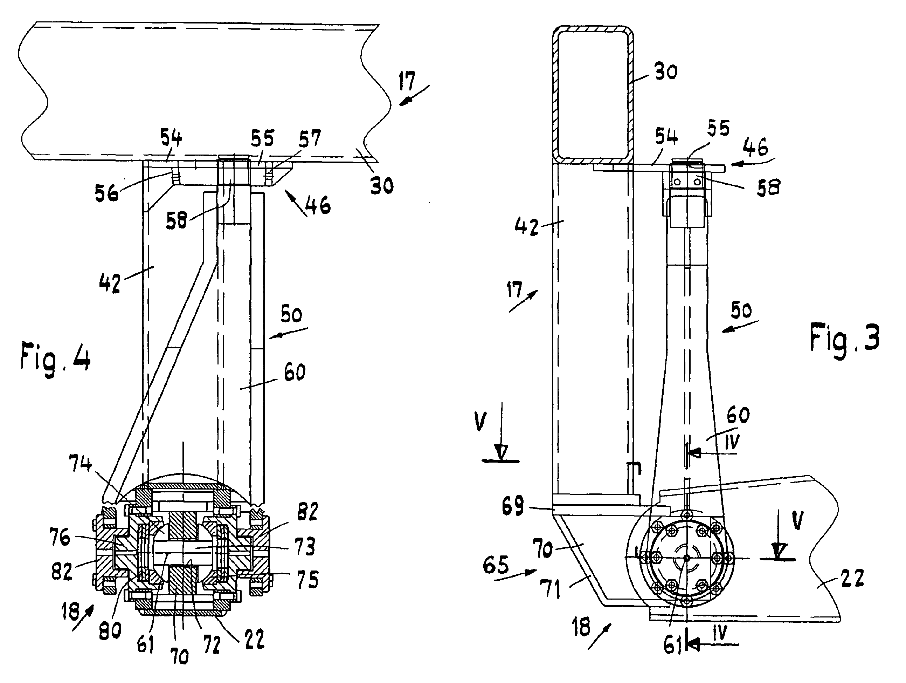

Die Fig. 1 und 2 zeigen ein Fahrgestell 1 für ein strassen- und geländegängiges Fahrzeug, beispielsweise einen gezogenen Anhänger, auf dem eine Ladefläche für lose oder feste Waren montiert werden kann. Dieses Fahrgestell 1 besteht aus wenigstens einer Fahrachse 2, das dargestellte Ausführungsbeispiel weist zwei Fahrachsen 2 und 3 auf, die jeweils paarweise nebeneinander angeordnete Räder 4, 5 und 6, 7 bzw. 8, 9 und 10, 11 einer Pendelachse 12, 13 bzw. 14, 15 aufweist. Die Pendelachsen 12 bis 15 sind jeweils zwischen den Rädern 4, 5; 6, 7; 8, 9; 10, 11 um eine in Fahrrichtung F verlaufende Achse begrenzt schwenkbar. Die begrenzte Schwenkbarkeit zeigen die Fig. 3 und 4. Es ist ein Fahrgestellrahmen 17 vorgesehen, an dem die Pendelachsen 12 bis 15 gelagert sind. Der Fahrgestellrahmen 17 weist in Fahrrichtung F betrachtet einenends resp. vorn, beidseits jeweils ein nach wenigstens zwei etwa senkrecht zueinander stehenden Ebenen schwenkbares Pendellager 18, 19 eines endseitig schwenkbar gelagerten und sich in Fahrrichtung F erstreckenden Achsträgers 22, 23 auf, der anderenends an dem Fahrgestellrahmen 17 abgestützt ist. Die Pendellager 18 bis 21 und die Achsträger 22 bis 25 sind anschliessend detailliert beschrieben.
Bei der dargestellten Ausführungsform befinden sich die den Fahrachsen 2 und 3 zugeordneten Pendellager 18, 19 resp. 20, 21 in Fahrrichtung F betrachtet bzw. bei Vorwärtsfahrt des Fahrgestells 1 an dem vorderen Ende des einer Fahrachse 2, 3 zugeodneten Fahrgestellrahmens 17.
Der Fahrgestellrahmen 17 einer Fahrachse 2, 3 besteht im Wesentlichen aus zwei seitlich beabstandeten Längsträgern 26, 27; 28, 29, die mit einem Querträger 30, 31 verbunden und oberhalb eines Achsträgers 22 bis 25 angeordnet sind.
Auf den Längsträgern 26 bis 29 ist eine Abstellplatte 32, 33; 34, 35 zur Verstärkung des Fahrgestellrahmens 17 befestigt bzw. vorgesehen, auf der eine nicht sichtbare Ladebrücke oder dgl. aufliegen kann.
Das seitliche Ende der Querträger 30, 31 ist jeweils mit einer Auflage 36, 37; 38, 39; 40, 41 ausgebildet, an welchen die Ladebrücke befestigt wird.
Zwei seitliche Bleche 97, 98 machen das vordere Fahrgestell 1 verwindungssteif. Die Pendellager 18, 19; 20, 21 sind jeweils am unteren Ende eines seitlich versetzten, senkrechten Stützträgers 42, 43; 44, 45 mit dem Querträger 30, 31 verbunden, sodass das Ende des Fahrgestellrahmens 17 als Joch erscheint und dadurch dem Fahrgestell 1 eine hohe Stabilität und einen einfachen Zugang zu den Pendelachsen 12 bis 15 sowie den Achsträgern 22 bis 25 verleiht.
Die Pendellager 18, 19; 20, 21 sind jeweils in einer etwa senkrecht angeordneten Ebene seitlich schwenkbar ausgebildet, d.h., dass die Achsträger 22, 23; 24, 25, an denen die Pendelachsen 12, 13, 14, 15 aufgehängt sind, um den gleichen Winkel schwenkbar sind. Zu dieser Ebene steht eine in Fahrrichtung F senkrecht stehende Ebene in der die Achsträger 22, 23; 24, 25 um eine quer zur Fahrrichtung F angeordnete Achse 61, 62; 63, 64 schwenkbar sind, jeder unabhängig vom anderen entsprechend der Unebenheit der Fahrbahn.
Die seitliche Verschwenkung der Achsträger 22, 23; 24, 25 ist durch einen sich in einer Kulisse 46, 47; 48, 49 bewegenden Lenkstock 50, 51; 52, 53 begrenzt (siehe die Fig. 1, 4 und 4). Die Kulisse 46, 47; 48, 49 ist als Platte 54 mit einem Führungsschlitz 55 ausgebildet, wobei die Platten 54 jeweils an der Unterseite der Querträger 30, 31 befestigt sind. Die Länge des Führungsschlitzes 55 ist durch Anschläge 56, 57 begrenzt, an denen der Lenkstock 50, 51; 52, 53 jeweils ansteht.
Das obere Ende des Lenkstocks 50, 51; 52, 53 ist durch einen Führungszapfen 58 ausgebildet, der sich im Führungsschlitz 55 der durch Rippen 59 verstärkten Platte 54 bewegt. Der Lenkstock 50, 51; 52, 53 ist durch einen gabelförmigen Schaft 60 gebildet, der mit dem Pendellager 18, 19; 20, 21 jeweils um die quer zur Fahrrichtung F angeordnete Achse 61, 62; 63, 64 schwenkbar verbunden ist.
Das Pendellager 18, 19; 20, 21, das anschliessend beschrieben wird, ist in einem mit dem unteren Ende des Stützträgers 42, 43; 44, 45 verbundenen Lagerbock 65, 66; 67, 68 angeordnet. Der Lagerbock 65, 66; 67, 68 besteht am oberen Ende aus einem mit dem Stützträger 42, 43; 44, 45 verbindbaren Flansch 69, beispielsweise mittels Schrauben, und einem robusten Steg 70, der gegen ein seitliches Kippen mit einem Versteifungsblech 71 ausgebildet ist.
Der gegen den Achsträger 22, 23; 24, 25 auskragende Steg 70 ist mit einer etwa horizontalen Bohrung 72 versehen, die von einer Welle 73 eines kugelförmigen Genkkopfes 74 durchsetzt wird. Der Gelenkkopf 74 ist in die Bohrung 72 des Steges 70 eingepresst oder in der Bohrung 72 drehbar gelagert, wie dargestellt.
Die Welle 73 bildet die Schwenkachse 61, 62; 63, 64. Die kugelförmigen Enden der Welle 73 sind der Gelenkkopf 74, der beidseits mit komplementären Gelenkpfannen 75 das Pendellager 18, 19; 20, 21 bildet. Die Gelenkpfannnen 75 sind jeweils in einem Gehäuse 76 angeordnet, das durch einen Flansch 77 mit dem Achsträger 22, 23; 24, 25 verschraubt ist.
Zwischen der auf einem Ringkragen 78 des Gehäuses 76 anstehenden Gelenkpfanne 75 und einem Gehäuseboden 79 ist eine Druckfeder 80 eingespannt, die für einen Anpressdruck der Gelenkpfanne 75 an dem Gelenkkopf 74 sorgt. An der Rückseite der Gehäuse 76 ist ein Lagerzapfen 81 befestigt bzw. vorgesehen, an dem das gabelförmige Ende des Lenkstocks 50, 51; 52, 53 gelagert ist. Hierzu ist das gabelförmige Ende des Lenkstocks 50, 51; 52, 53 mit jeweils einer Lagerbüchse 82 versehen, die den Lagerzapfen 81 umgibt, wobei dazwischen eine Gleitlagerbüchse 83 angeordnet ist.
Zur Schmierung der Pendellager 18, 19; 20, 21 sind die Lagerbüchsen 82 und die Gehäuse 76 mit durchsetzenden Bohrungen 84 ausgerüstet.
Das rückwärtige Ende der Achsträger 22, 23; 24, 25 ist durch jeweils ein Abstützorgan 85, 86; 87, 88 mit dem Fahrgestellrahmen 17 verbunden und zumindest annähernd vertikal geführt.
Als Abstützorgane 85, 86; 87, 88 sind Kolben-Zylinder-Einheiten vorgesehen, die bezüglich Abstützlänge variierbar und einstellbar sind. Die Abstützorgane 85, 86; 87, 88 sind an dem Fahrgestellrahmen 17 und den Achsträgern 22, 23; 24, 25 angelenkt.
Die als Kolben-Zylinder-Einheit ausgebildeten Abstützorgane 85, 86; 87, 88 sind mit einem Druckspeicher 89 leitungsverbunden.
Das rückwärtige Ende der Achsträger 22, 23; 24, 25 ist mittels Rolle 90 in einer Führungskulisse 91 angeordnet, sodass es sich bei Bodenunebenheiten senkrecht bewegen kann.
Gemäss den Fig. 1 und 2 ist der Fahrgestellrahmen 17 eines zugeschalteten bzw. nachlaufenden Fahrgestells 1 an dem rückwärtigen Ende mit dem Querträger 31 des Fahrgestellrahmens 17 des zugeschalteten Fahrgestells 1 verbunden.
Die den Achsträgern 22, 23, 24, 25 zugeordneten Kolben-Zylinder-Einheiten 85, 86; 87, 88 sind untereinander durch Leitungen mit einem Druckspeicher verbunden.
Die Achsträger 24, 25 des zugeschalteten Fahrgestells 1 sind am vorderen Ende gemeinsam um jeweils eine etwa senkrechte Achse schwenkbar mit den Pendellagern 20, 21 verbunden. Hierzu sind die Achsträger 24, 25 an dem rückwärtigen Ende an einer wenigstens annähernd quer zur Fahrrichtung F angeordneten erbindungsstange 92 endseitig angelenkt. Dadurch ist es möglich, die Achsträger 24, 25 resp. das zugeschaltete Fahrgestell 1 durch eine Lenkvorrichtung (nicht ersichtlich) zu lenken.
Zur seitlichen Schwenkbarkeit der Achsträger 24, 25 sind diese mit ihren Enden mit einer an dem Fahrgestellrahmen 17 angeordneten, quer zur Fahrrichtung F wirksamen Führungsvorrichtung 93 verbunden. Die Führungsvorrichtung 93 weist dazu eine mit dem Fahrgestellahmen 17 verbundene Führungsschiene 94 und einen Schieber 95 auf, der durch Stützelemente 96 mit den Achsträgern 24, 25 verbunden ist.
Die an den rückwärtigen Enden der Achsträger 24, 25 vorgesehenen Abstützorgane 87, 88 sind an dem gegenüberliegenden Ende an dem Schieber 95 oder dem Fahrgestellrahmen 17 angelenkt.
Die Lenkbewegung des zugeschalteten Fahrgestells 1 und deren Begrenzung könnte beispielsweise durch hydraulisch betätigbare Kolben-Zylinder-Einheiten erfolgen, wie sie am rückwärtigen Ende des zugeschalteten Fahrgestells 1 veranschaulicht sind.

## Patentansprüche

1. Fahrgestell (1) für ein strassen- und geländegängiges Fahrzeug, insbesondere ein Anhänger, mit paarweise nebeneinander angeordnete Räder (4, 5; 6, 7; 8, 9; 10, 11) aufweisenden, eine Fahrachse bildenden Pendelachsen (12, 13; 13, 14) die jeweils um eine zwischen den Rädern (4, 5; 6, 7; 8, 9; 10, 11) in Fahrrichtung (F) verlaufende Achse begrenzt pendelbar an einem Fahrgestellrahmen (17) gelagert sind dass der Fahrgestellrahmen (17) in Fahrrichtung (F) betrachtet einenends, beidseits jeweils ein nach wenigstens zwei etwa senkrecht zueinanderstehenden Ebenen schwenkbares Pendellager (18, 19, 20, 21) eines endseitig schwenkbar gelagerten und sich in Fahrrichtung (F) erstrekkenden sowie anderenends an dem Fahrgestellrahmen (17) abgestützten Achsträger (22, 23; 24, 25) aufweist, **dadurch gekennzeichnet, dass** die jeweils in einer etwa senkrecht angeordneten Ebene seitlich schwenkbar ausgebildeten. Pendellager (18, 19; 20, 21) mit einem in einer mit dem Fahrgestellrahmen (17) verbundenen Kulisse (46, 47; 48, 49) geführten Lenkstock (50, 51; 52, 53) begrenzt schwenkbar verbunden sind.

2. Fahrgestell nach Anspruch 1, **dadurch gekennzeichnet, dass** die Pendellager (18, 19; 20, 21) jeweils am unteren Ende eines seitlich versetzten, senkrechten Stützträgers (42, 43; 44, 45) des Fahrgestellrahmens (17) befestigt sind.

3. Fahrgestell nach Anspruch 2, **dadurch gekennzeichnet, dass** der Fahrgestellrahmen (17) an dem in Fahrrichtung (F) vorderen Ende als tragendes Joch ausgebildet ist.

4. Fahrgestell nach einem der Ansprüche 1 bis 3, **dadurch gekennzeichnet, dass** das am Fahrgestellrahmen (17) abgestützte rückwärtige Ende eines Achsträgers (22, 23; 24, 25) mit einem bezüglich Abstützlänge variierbaren Abstützorgan (85,86; 87,88) verbunden ist,
das durch eine an eine ein Druckmedium fördernde Pumpe anschliessbare, mit einem Druckspeicher verbundene Kolben-Zylinder-Einheit ausgebildet und zumindest annähernd senkrecht geführt ist.

5. Fahrgestell nach einem der Ansprüche 1-4, **dadurch gekennzeichnet, dass** sich die Pendellager (18, 19; 20, 21) bei Vorwärtsfahrt des Fahrgestells (1) vorderenends des Fahrgestellrahmens (17) befinden.

6. Fahrgestell nach einem der Ansprüche 1 bis 5, **dadurch gekennzeichnet, dass** die Pendellager (18, 19; 20, 21) jeweils einen mit dem Fahrgestellrahmen (179 verbundenen, kugeligen Gelenkkopf (74) aufweisen, an dem zwei sich gegenüberliegende, mit dem Achsträger (22, 23; 24, 25) und dem Lenkstock (50, 51; 52, 53) verbundene Gelenkpfannen (75) gelagert sind.

7. Fahrgestell nach Anspruch 6, **dadurch gekennzeichnet, dass** die Gelenkpfannen (75) jeweils durch eine Druckfeder (80) beauschlagt sind.

8. Fahrgestell nach Anspruch 7, **dadurch gekennzeichnet, dass** die Druckfedern (80) jeweils in einem an dem Achsträger (22, 23; 24, 25) befestigten, die Gelenkpfanne (75) aufnehmenden Gehäuse (76) angeordnet sind.

9. Fahrgestell nach einem der Ansprüche 1 bis 8, **dadurch gekennzeichnet, dass** der Lenkstock (50, 51; 52, 53) im Verbindungsbereich zu einem Pendellager (18, 19; 20, 21) jeweils als Gabel ausgebildet ist, die mit den Gelenkpfannen (75) schwenkbar verbunden ist.

10. Fahrgestell nach einem der Ansprüche 1 bis 9, **dadurch gekennzeichnet, dass** mit dem Fahrgestellrahmen (17) ein weiterer Fahrgestellrahmen (17) eines zugeschalteten bzw. nachlaufenden Fahrgestells (1) verbunden ist.

11. Fahrgestell nach einem der Ansprüche 1 bis 10, **dadurch gekennzeichnet, dass** die durch eine Kolben-Zylinder-Einheit gebildeten Abstützorgane (85, 86; 87, 88) der Fahrgestelle (1) durch ein Druckmedium führende Leitungen mit einem Druckspeicher verbunden sind.

12. Fahrgestell nach Anspruch 11, **dadurch gekennzeichnet, dass** die Achsträger (24, 25) des zugeschalteten bzw. nachlaufenden Fahrgestells (1) gemeinsam am vorderen Ende um eine etwa senkrechte Achse schwenkbar mit den Pendellagern (20, 21) verbunden sind.

13. Fahrgestell nach Anspruch 12, **dadurch gekennzeichnet, dass** die Achsträger (24, 25) an dem rückwärtigen Ende an einer wenigstens annähernd quer zur Fahrrichtung (F) angeordneten Verbindungsstange (92) angelenkt sind und durch eine Lenkvorrichtung zum Lenken ausgebildet sind.

14. Fahrgestell nach Anspruch 13, **dadurch gekennzeichnet, dass** die durch die Verbindungsstange (92) verbundenen Achsträger (24, 25) in einer an dem Fahrgestellrahmen (17) angeordneten, quer zur Fahrrichtung (F) wirksamen Führungsvorrichtung (93) verschwenkbar sind.

15. Fahrgestell nach Anspruch 14, **dadurch gekennzeichnet, dass** ein in einer Führungsschiene (94) beweglicher Schieber (95) der Führungsvorrichtung (93) durch Stützelemente (96) mit den Achsträgern (24, 25) verbunden ist.

16. Fahrgestell nach Anspruch 15, **dadurch gekennzeichnet, dass** die Stützelemente (96) mit den Achsträgern (24, 25) verbunden sind.

17. Fahrgestell nach einem der Ansprüche 10 bis 16, **dadurch gekennzeichnet, dass** die am rückwärtigen Ende der Achsträger (24, 25) vorgesehenen Abstützorgane (87, 88) an dem Schieber (95) oder dem Fahrgestellrahmen (17) angelenkt sind.

## Claims

1. Chassis (1) for a road-holding and off-road vehicle, in particular a trailer, comprising swing axles (12, 13; 13, 14) forming a wheel axle and having wheels (4, 5; 6, 7; 8, 9; 10, 11) arranged in pairs alongside one another, each swing axle being mounted on a chassis frame (17) in such a manner that it can swing to a limited extent about an axis extending between the wheels (4, 5; 6, 7; 8, 9; 10, 11) in the direction of travel (F), wherein the chassis frame (17) as viewed in the direction of travel (F) is provided at one end on either side with respective self-aligning bearings (18, 19; 20, 21) which can pivot towards at least two planes substantially perpendicular to one another for cross members (22, 23; 24, 25) pivotably mounted at one end and extending in the direction of travel (F) and supported at the other end on the chassis frame (17), **characterised in that** the self-aligning bearings (18, 19; 20, 21) each designed to pivot laterally in a substantially vertically arranged plane are connected to a steering column assembly (50, 51; 52, 53) guided in a link (46, 47; 48, 49) connected to the chassis frame (17) in such a manner that they can pivot to a limited extent.

2. Chassis according to claim 1, **characterised in that** the self-aligning bearings (18, 19; 20, 21) are each fixed to the lower end of a laterally offset vertical support member (42, 43; 44, 45) of the chassis frame (17).

3. Chassis according to claim 2, **characterised in that** the chassis frame (17) is designed as a supporting yoke at the front end in the direction of travel (F).

4. Chassis according to one of claims 1 to 3, **characterised in that** the rear end of a cross member (22, 23; 24, 25) supported on the chassis frame (17) is connected to a supporting element (85, 86; 87, 88) the supporting length of which can be varied, the supporting element being formed by a piston/cylinder unit which can be connected to a pump delivering a pressure medium and is connected to a pressure accumulator and being guided at least approximately vertically.

5. Chassis according to one of claims 1 to 4, **characterised in that** the self-aligning bearings (18, 19; 20, 21) are situated at the front end of the chassis frame (17) during forward travel of the chassis (1).

6. Chassis according to one of claims 1 to 5, **characterised in that** the self-aligning bearings (18, 19; 20, 21) each have a ball joint head (74) connected to the chassis frame (17) on which two opposing sockets (75) connected to the cross member (22, 23; 24, 25) and to the steering column assembly (50, 51; 52, 53) are mounted.

7. Chassis according to claim 6, **characterised in that** the sockets (75) are each acted upon by a compression spring (80).

8. Chassis according to claim 7, **characterised in that** the compression springs (80) are each arranged in a housing (76) fixed to the cross member (22, 23; 24, 25) and receiving the socket (75).

9. Chassis according to one of claims 1 to 8, **characterised in that** the steering column assembly (50, 51; 52, 53) is designed as a fork pivotably connected to the sockets (75) in the region in which it is connected to a self-aligning bearing (18, 19; 20, 21).

10. Chassis according to one of claims 1 to 9, **characterised in that** another chassis frame (17) of a connected or trailing chassis (1) is connected to the chassis frame (17).

11. Chassis according to one of claims 1 to 10, **characterised in that** the supporting elements (85, 86; 87, 88) of the chassis (1) formed by a piston/cylinder unit are connected to a pressure accumulator by means of lines conducting a pressure medium.

12. Chassis according to claim 11, **characterised in that** the cross members (24, 25) of the connected or trailing chassis (1) are jointly connected to the self-aligning bearings (20, 21) at the front end in such a manner that they can pivot about a substantially vertical axis.

13. Chassis according to claim 12, **characterised in that** the cross members (24, 25) are hinged at the rear end to a connecting rod (92) arranged at least approximately transversely to the direction of travel (F) and are formed by a steering device for steering.

14. Chassis according to claim 13, **characterised in that** the cross members (24, 25) connected by the connecting rod (92) can swivel in a guide device (93) arranged on the chassis frame (17) and effective transversely to the direction of travel (F).

15. Chassis according to claim 14, **characterised in that** a slide (95) of the guide device (93) movable in a guide rail (94) is connected to the cross members (24, 25) by means of support elements (96).

16. Chassis according to claim 15, **characterised in that** the support elements (96) are connected to the cross members (24, 25).

17. Chassis according to one of claims 10 to 16, **characterised in that** the supporting elements (87, 88) provided at the rear ends of the cross members (24, 25) are hinged to the slide (95) or to the chassis frame (17).

## Revendications

1. Châssis (1) pour un véhicule routier et tout-terrain, en particulier une remorque, avec des essieux oscillants (12, 13 ; 13, 14) formant un essieu de marche ou de roulement, présentant des roues (4, 5 ; 6, 7 ; 8, 9 ; 10, 11) disposées côte à côte par paires, lesquels sont montés chaque fois sur un cadre de châssis (17) de manière à pouvoir osciller de manière limitée autour d'un axe s'étendant entre les roues (4, 5 ; 6, 7 ; 8, 9 ; 10, 11) dans le sens de la marche (F), le cadre de châssis (17) présentant, à une extrémité vue dans le sens de la marche (F), de chaque côté chaque fois un palier articulé (18, 19 ; 20, 21) pivotant dans au moins deux plans à peu près perpendiculaires entre eux d'un support d'essieu (22, 23 ; 24, 25) monté pivotant à une extrémité et s'étendant dans le sens de la marche (F) en étant appuyé sur le cadre de châssis (17) à l'autre extrémité, **caractérisé par le fait que** les paliers articulés (18, 19 ; 20, 21) chaque fois montés latéralement pivotants dans un plan à peu près perpendiculaire sont reliés de manière à pouvoir pivoter de manière limitée à une colonne de direction (50, 51 ; 52, 53) guidée dans une coulisse (46, 47 ; 48, 49) reliée au cadre de châssis (17).

2. Châssis selon la revendication 1, **caractérisé par le fait que** les paliers articulés (18, 19 ; 20, 21) sont chaque fois fixés à l'extrémité inférieure d'une poutre de support (42, 43 ; 44, 45) verticale, décalée latéralement, du cadre de châssis (17).

3. Châssis selon la revendication 2, **caractérisé par le fait que** le cadre de châssis (17) est réalisé sous forme de joug porteur à l'extrémité avant dans le sens de la marche (F).

4. Châssis selon l'une des revendications 1 à 3, **caractérisé par le fait que** l'extrémité arrière appuyée sur le cadre de châssis (17) d'un support d'essieu (22, 23 ; 24, 25) est reliée à un organe d'appui (85, 86 ; 87, 88) variable en ce qui concerne la longueur d'appui qui est formé par une unité à piston et cylindre raccordable à une pompe refoulant un fluide sous pression, reliée à un accumulateur de pression, et guidé au moins approximativement verticalement.

5. Châssis selon l'une des revendications 1 à 4, **caractérisé par le fait que** les paliers articulés (18, 19 ; 20, 21) se trouvent à l'extrémité avant du cadre de châssis (17) en marche avant du châssis (1).

6. Châssis selon l'une des revendications 1 à 5, **caractérisé par le fait que** les paliers articulés (18, 19 ; 20, 21) présentent chaque fois une tête d'articulation (74) sphérique, reliée au cadre de châssis (17), sur laquelle sont montées deux cavités d'articulation ou coussinets à rotule (75) opposées, reliées au support d'essieu (22, 23 ; 24, 25) et à la colonne de direction (50, 51 ; 52, 53).

7. Châssis selon la revendication 6, **caractérisé par le fait que** les cavités d'articulation ou coussinets à rotule (75) sont chaque fois soumises à un ressort de compression (80).

8. Châssis selon la revendication 7, **caractérisé par le fait que** les ressorts de compression (80) sont chaque fois disposés dans un boîtier (76) fixé sur le support d'essieu (22, 23 ; 24, 25), recevant la cavité d'articulation ou coussinet à rotule (75).

9. Châssis selon l'une des revendications 1 à 8, **caractérisé par le fait que** la colonne de direction (50, 51 ; 52, 53) est chaque fois réalisée sous forme de fourche reliée de manière pivotante aux cavités d'articulation ou coussinets à rotule (75) dans la zone de liaison avec un palier articulé (18, 19 ; 20, 21).

10. Châssis selon l'une des revendications 1 à 9, **caractérisé par le fait qu'**un autre cadre de châssis (17) d'un châssis (1) ajouté ou traîné est relié au cadre de châssis (17).

11. Châssis selon l'une des revendications 1 à 10, **caractérisé par le fait que** les organes d'appui (85, 86 ; 87, 88) des châssis (1) formés par une unité à piston et cylindre sont reliés à un accumulateur de pression par des conduites conduisant un fluide sous pression.

12. Châssis selon la revendication 11, **caractérisé par le fait que** les supports d'essieu (24, 25) du châssis (1) ajouté ou traîné sont reliés en commun à l'extrémité avant aux paliers articulés (20, 21) de manière pivotante autour d'un axe à peu près vertical.

13. Châssis selon la revendication 12, **caractérisé par le fait qu'**à l'extrémité arrière les supports d'essieu (24, 25) sont articulés sur une tige de liaison (92) au moins approximativement perpendiculaire au sens de la marche (F) et formés par un dispositif de direction pour le braquage.

14. Châssis selon la revendication 13, **caractérisé par le fait que** les supports d'essieu (24, 25) reliés par la tige de liaison (92) sont orientables dans un dispositif de guidage (93) disposé sur le cadre de châssis (17), actif perpendiculairement au sens de la marche (F).

15. Châssis selon la revendication 14, **caractérisé par le fait qu'**un coulisseau (95) du dispositif de guidage (93), mobile dans un rail de guidage (94), est relié aux supports d'essieu (24, 25) par des éléments de soutien (96).

16. Châssis selon la revendication 15, **caractérisé par le fait que** les éléments de soutien (96) sont reliés aux supports d'essieu (24, 25).

17. Châssis selon l'une des revendications 10 à 16, **caractérisé par le fait que** les organes d'appui (87, 88) prévus à l'extrémité arrière des supports d'essieu (24, 25) sont articulés sur le coulisseau (95) ou le cadre de châssis (17).
